# EUROPEAN PATENT APPLICATION

(11) **EP 2 246 764 A1**
(43) Date of publication of application: **03.11.2010**
(21) Application number: 10160805.7
(22) Date of filing: 22.04.2010
(51) Int. Cl.: G05D 1/02

(54) **System for guiding self-propelled apparatus and method therefore**

(30) Priority: 28.04.2009 IT GE20090026
(71) Applicant: UNIVERSITA DEGLI STUDI DI GENOVA, 16126 Genova (IT)
(72) Inventor: Baglietto, Marco, 16145 Genova (IT); Cannata, Giorgio, 16145 Genova (IT); Capezio, Francesco, 16145 Genova (IT); Grosso, Alberto, 16145 Genova (IT); Sgorbissa, Antonio, 16145 Genova (IT)
(74) Representative: Karaghiosoff, Giorgio Alessandro

(57) **Abstract**

A system for guiding one or more self-propelled apparatus (1), composed of one or more paths covered by self-propelled travelling apparatus, said paths having position identification devices (3,4) therealong, in which positions are stored, and which are arranged along each path at one or more locations thereof, and said identification devices being adapted to be remotely queried for position data by one or more self-propelled apparatus. The self-propelled apparatus include propulsion and directional control means, means for reading and writing the information contained in the identification devices, means for processing information to determine the path of the apparatus from the relative positions of said identification devices.

## Description

The invention relates to a system for guiding one or more self-propelled apparatus and a method for guiding said self-propelled apparatus according to which said system operates.

In the art of robotics, there currently exists a variety of guidance or navigation systems for self-propelled devices that move autonomously within a certain environment, along paths or courses defined by the structure of the environment. In order to move autonomously, said self-propelled apparatus are required to know the structure of the external environment, and to recognize their position and direction or orientation with respect to the structure or the morphology of the environment in which they move.

To date, guidance systems for self-propelled apparatus have included position detection means which rely on the knowledge of a map of the external environment by the self-propelled apparatus and on the ability of self-propelled apparatus to recognize obstacles along the route they are following, for instance using proximity sensors.

Other position and direction recognition systems are, for instance, GPS systems or similar systems relying on cellular communication networks or the like.

Nevertheless, in these systems the self-propelled apparatus has no knowledge of the path to be covered to connect a certain point of departure with a predetermined point of arrival, unless a stored map of the environment in which the self-propelled apparatus moves is provided in combination. Without such map, the self-propelled apparatus may know where it is, in which direction it is moving and whether obstacles are expected within a given distance in such direction of motion, but it cannot assess whether it is moving along the proper path to reach a given destination.

On the other hand, the creation of detailed maps of the environment in which a self-propelled apparatus moves may be a laborious operation, and the map also requires updating when the environment is changed for some reason. In certain cases, for instance, the need of creating a map of an environment may not be economically desirable.

Identification devices, e.g. known as tags, are currently known in the art, which are miniaturized to a high degree, have very low costs and are capable of wireless, i.e. radio or the like communication, using inquiry devices. In a particular very common example the so-called RFID tags are used to identify goods and detect their path, or even to store goods characteristics or other information. These tags are equipped with transceiver means and storage means, generally have a task control unit and may have, in certain cases, processing means that afford a very flexible use thereof. Their low cost makes them suitable for use in large numbers, without any excessive cost increase.

The invention has the object of providing a system as described hereinbefore, in which simple and inexpensive means are used to provide a simpler, less expensive and more quickly implemented system for guiding self-propelled apparatus in any environment in which the latter are required to move autonomously.

The invention has the additional object of allowing more precise identification of the position of a self-propelled apparatus along a predetermined path as well as instructing said self-propelled apparatus about the path on which he is moving, particularly the given point of departure and given destination that the self-propelled apparatus has to reach, without excessively increasing the system burden and using very common and easy to find devices.

The invention fulfils the above objects by a system as described hereinbefore, which is composed of one or more paths that may be covered by self-propelled travelling apparatus, said paths being composed of position identification devices, said identification devices being arranged along each path at one or more locations thereof, and said identification devices being adapted to be remotely queried for position data by one or more self-propelled apparatus.

Each of said identification devices stores position information of the identification devices closest to it, such position information being of either relative type, i.e. related to other identification devices in the system or absolute type, i.e. related to an absolute coordinate system.

According to a further possible characteristic of the system, the self-propelled apparatus has two different operating modes, depending on the type of task it has to accomplish, and regardless of the type of information contained in the identification devices concerning either its relative position with respect to other identification devices or its absolute position with respect to an absolute coordinate system.

A first operating mode involves no fixed destination, with the self-propelled apparatus moving in a predetermined manner along the paths of the system, and only knowing the identification devices through which it has passed and moving towards the identification devices it has not reached yet.

In one example of this mode, the self-propelled apparatus may have cleaning tasks, and is not required to run through paths it has already covered, and clean them again, but only has to move towards unexplored sections.

In a second operating mode, the self-propelled apparatus has to reach at least one predetermined destination or run through a path that leads it to successive stations to accomplish predetermined tasks.

In this case, in the first instance, the path to be followed, which is defined by a point of departure and a final destination as well as intermediate destinations, if any, will be determined by the identification devices, uniquely recognizable by ID codes, that the self-propelled apparatus will have to find along the path to be covered.

One embodiment suitable for the implementation of this step may consist in providing a database in the memory of the self-propelled apparatus, which database contains a list of the identification devices to be reached, for the self-propelled apparatus to choose from time to time among the various identification devices, and said database is created during or after laying the identification devices and then loaded into the different self-propelled apparatus prior to their starting the paths.

In this case, the provision of identification devices is also advantageous in terms of memory, because memory is only required to contain the succession of identification devices arranged along the path from start to end and their mutual relations, and will not have to contain the data of an internal map of the environment.

In one example of this mode, the self-propelled apparatus may be used for sorting out goods of various natures and distributing them to stores. In this case, each shelf or room or department will be defined by a different identification device and the self-propelled apparatus may associate appropriate goods with corresponding shelves, or rooms or departments according to the database contained therein.

In a further example, the self-propelled apparatus may accomplish the task of delivering medicaments or the like to patients in a hospital. In this case, each patient will be defined by a different identification device and the self-propelled apparatus may associate the appropriate medicament to the corresponding patient.

Each of said self-propelled apparatus includes propulsion and directional control means, means for reading and writing the information contained in said identification devices, electronic processing means for processing position information and making choices, a processing program being executed by said electronic processing means for determining the path of the apparatus from the relative positions of said identification devices. Position data is provided to a control unit of said propulsion and directional control means, which implements said choices made by said electronic processing means, at least one pair of said identification devices being provided for one or more locations of the path, each comprising a transceiver unit, a task control unit, possibly a processing unit and a memory unit that contains information about the identity and relative position with respect to other identification devices or absolute position with respect to an absolute coordinate system, of the identification device that contains it, about the identity and relative position with respect to other identification devices or absolute position with respect to an absolute coordinate system, of the identification device making a pair with the identification device that contains it, and about the identity and relative position with respect to other identification devices or absolute position with respect to an absolute coordinate system, of the identification devices in the vicinity of the identification device that contains it.

The possibility of using either an absolute reference system or a relative reference system allows said self-propelled apparatus to know the path to be covered either according to a final destination or according to a succession of identification devices to be followed.

The association of each position identification device with a second position identification device in a predetermined position relative to the former, provides a position identification unit that both allows the self-propelled apparatus to precisely identify its position along the path, and defines a reference line having a predetermined direction that can be used by the self-propelled apparatus to determine its orientation, i.e. its direction of motion, e.g. by defining a main edge axis as, such as particularly the longitudinal axis.

Since the memory of the position identification devices also contains information about the relative position with respect to other identification devices or about the absolute position with respect to an absolute coordinate system, of other identification devices located on the paths that pass through the location point of said identification device, the self-propelled apparatus can assess on which path it is moving, and hence it can select which path to follow to reach the desired destination, for instance in case of intersection of two or more paths. It is worth noting that, for this purpose, each position identification device was surprisingly found to only additionally require storage of the relative position with respect to other identification devices or the absolute position with respect to an absolute coordinate system, of all the other closest identification devices, i.e. those that are connected to the identification device by a path section free of any other identification devices.

By this arrangement, the identification devices require a lighter structure, which makes them less bulky and expensive. Obviously, other data may be added to the information contained in each identification device, such as the relative position with respect to other identification devices or the absolute position with respect to an absolute coordinate system, of other farther identification devices, which uniquely identify a given path because they are in a position in which said path does not intersect other paths, or each identification device may also store the data representing the relative position with respect to other identification devices or the absolute position with respect to an absolute coordinate system, of all the identification devices arranged along a path or at least along part of the paths or along all of the paths that pass through that identification device.

Further advantageous characteristics of the invention will form the subject of the dependent claims.

It shall be particularly noted that the use of identification devices with readable and writable memories, as well as the provision of reading and writing means in the self-propelled apparatus provide improvements to the system, in that they allow continuous updating and checking of information about relative position with respect to other identification devices or absolute position with respect to an absolute coordinate system, and possibly also checking of the operating conditions of the self-propelled apparatus. Thus, by equipping the self-propelled apparatus with sensors for measuring the distance that has been covered and/or for determining the GPS position and/or other alternative navigation sensors, each time that such apparatus reach an identification device and read the data representing its relative position with respect to other identification devices or its absolute position with respect to an absolute coordinate system, they may check if this data is correct and update it, which affords more precise data, due to the use of a statistic comprising a large number of measurements, i.e. the mean of a huge number of measurements that is constantly updated. In addition, when the deviation of measured data from stored data exceeds a given threshold, updating may be prevented, and a check may be made on the functions of the units of the identification devices and/or the self-propelled apparatus.

According to one more advantageous improvement, each self-propelled apparatus may be equipped with means for laying down the identification devices and may be adapted to determine possible paths and mark them by laying down identification devices along the paths. In this case, the environment is automatically explored by self-propelled apparatus using, for instance, on-board navigation devices and navigation sensors and the possible paths are identified by the arrangement of the succession of identification devices with no need for any human action and planning or preparation operations, such as the creation of a detailed map of the environment or else.

The invention also relates to a method that is used by the guiding system, and is defined in the claims.

Further improvements of the system and method will form the subject of the subclaims.
The characteristics of the invention and the advantages deriving therefrom will appear more clearly from the following detailed description of one embodiment, which is shown by way of a non limiting embodiment in the annexed drawings, in which:
Figure 1 is a top plan schematic view of the system of the present invention.
Figure 2 is a top schematic view of the self-propelled apparatus having laying features, which prepares the paths and checks the correctness of the information representing the relative position with respect to other identification devices or the absolute position with respect to an absolute coordinate system inscribed in the identification devices.
Figure 3 shows a block diagram of the structure of a self-propelled apparatus.
Figure 4 is a top view like the previous figures of the self-propelled apparatus and a pair of identification devices belonging to a position and orientation identification unit, i.e. a so-called "island".
Figure 5 is a top view of the self-propelled apparatus and a pair of identification devices.
Figure 6 shows a block diagram of the structure of an identification device.
Figure 7 is a schematic top plan view of four successive steps of system operation.
Figure 8 shows a particular embodiment in which the self-propelled apparatus is replaced by a guidance device for human personnel with user interface means.
Figure 9 shows two possible operating modes of the system.

The figures schematically show the structure and operation of one embodiment of the system of the present invention.

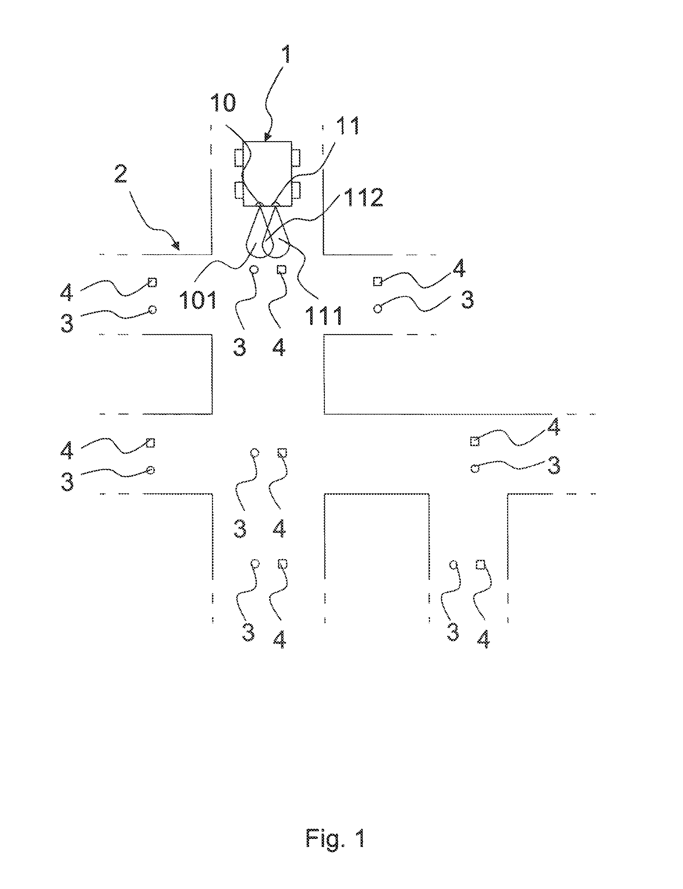

Figure 1 is a top plan schematic view of the system of the present invention, which is composed of an environment 2 containing one or more paths, identified by identification devices 3 and 4. As explained hereafter in greater detail, the identification devices 3 and 4 are arranged in pairs at predetermined locations of each path, and form areas, known as "islands", for identification of the position and/or orientation of the self-propelled apparatus. These identification devices 3, 4 are designed to be remotely queried in a contactless manner by each self-propelled apparatus 1 that moves in the environment along one or more of the paths defined by a succession of said identification devices 3, 4 arranged along said paths at predetermined relative distances between said identification devices of the individual "islands" and at predetermined locations of the paths. As described in greater detail hereinbelow, each self-propelled apparatus 1 has two receiving and transmitting antennas 10 and 11, whose receiving lobes 101 and 111 have an intersection area 112, for improved precision in the identification of the position and orientation of the self-propelled apparatus. Such self-propelled apparatus 1 follows the path in accordance with the information received from the identification devices.

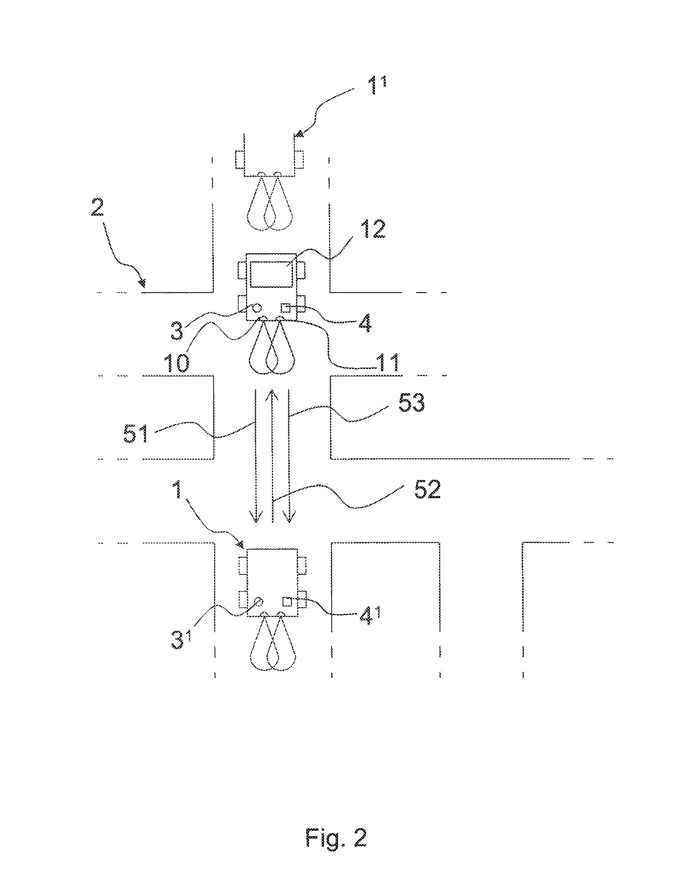

Figure 2 is a top plan view of the system of the present in which the self-propelled apparatus 1 equipped with the above described means is engaged in the step of laying the identification devices through said laying unit 12, at predetermined locations of the path.

Once a first position has been reached along a path, the self-propelled apparatus 1 places the identification devices 3 and 4, and writes relative position and orientation information measured by on-board sensors into the memory unit contained in each of them. Then, it continues its path with a forward movment in a predetermined direction in which the path is free of any obstacles, as determined, for instance, by on-board sensors, which direction, in the illustrated embodiment, is as shown by arrow 51. After covering a certain distance, that can be predetermined as the maximum distance between two successive identification units, or may be determined by other criteria, such as the presence of obstacles or crossings, the self-propelled apparatus 1 lays a further pair of identification devices 3' and 4', and writes relative position and orientation information concerning the pair 3 and 4 and the pair 3' and 4' into their memory unit. According to a further improvement of the invention, in order to check that the detected data is correct, the self-propelled apparatus is adapted to make a return movement towards the departure position, i.e. in the direction of arrow 52, to move from the position in which it lays the next identification devices 3' and 4' to those 3 and 4 it laid immediately before. At the end of this return stroke 52, with the distance and direction measurements made by the on-board sensors the self-propelled apparatus 1 checks that the information written in the identification devices 3, 4, 3' and 4' are correct and it they are not, it updates the information contained in the identification devices 3 and 4. Then, it moves again towards the identification devices 3' and 4', with a movement in the direction of arrow 53. Once it reaches the identification devices 3' and 4', it checks, like in the previous step, that the information written in the identification devices 3, 4, 3' and 4' are correct, and if they are not, it updates the information contained in the identification devices 3' and 4'. If the information contained in the identification devices 3, 4, 3' and 4' has been found to be different from the measurements taken along the path, the self-propelled apparatus 1 repeats its movements, identified by arrows 52 and 53 and accordingly updates the information contained in the identification devices 3, 4, 3' and 4' until it reaches appreciable results, or moves on to a new laying location.

When an environment can be crossed by a plurality of different paths that form a network of paths, two or more self-propelled apparatus 1 may be used in combination, all having the ability of laying identification devices as described above. Figure 2 shows by way of example a second self-propelled apparatus 1' that lays identification devices with the same method as the self-propelled apparatus, along a different path, that may partially overlap the path followed by the other self-propelled apparatus 1. In this case, the self-propelled apparatus 1' may advantageously perform the updating and correction operations designed for self-propelled apparatus, as described hereinabove also referring to self-propelled apparatus, that have been described above also referring to self-propelled apparatus without identification device laying units 12. The self-propelled apparatus 1' may easily detect the presence of deviations of the path that have not been followed by another self-propelled apparatus 1, because each self-propelled device may leave a trace of its passage which is given in that the identification device stores the position of the next identification device along the path that has been followed. Therefore, if a self-propelled apparatus detects by on-board sensors the possibility of covering a given path may check whether that deviation has been followed by some other self-propelled apparatus 1 by analyzing the data stored in an identification device 3, 4. If the identification device in the selected direction of advance does not contain position information of a next identification device in its memory, then the path in that direction has not been explored by any self-propelled apparatus 1.

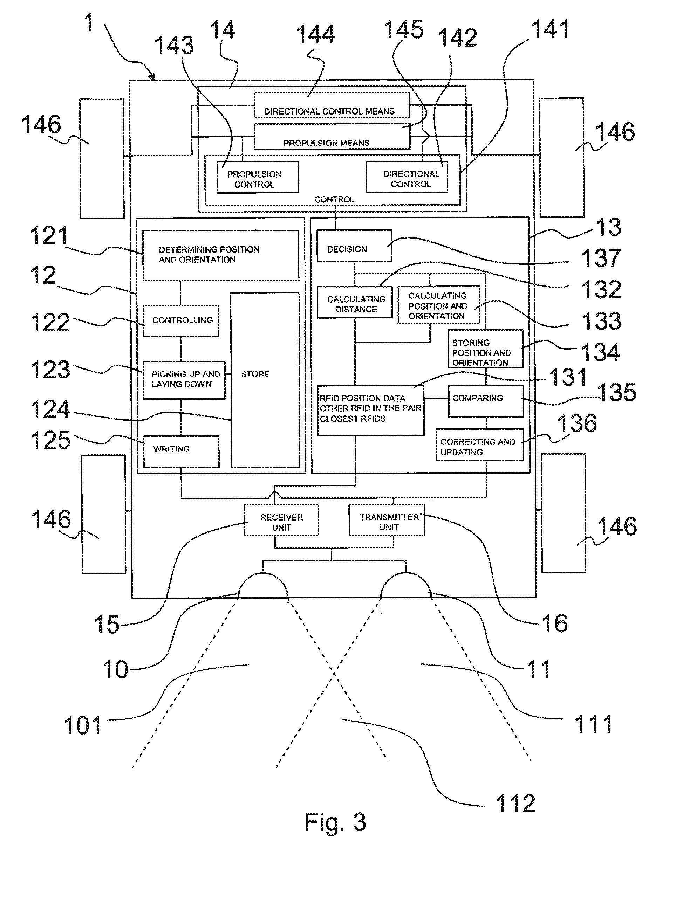

Figure 3 shows an example of a structure of a self-propelled apparatus 1 of the present invention and is designed to interact with the above described identification devices 3, 4. Referring to the example of Figure 2, said self-propelled apparatus has a very complex form and comprises both base units and units designed to perform additional and improved functions.

As a base unit, each self-propelled apparatus 1 comprises a locomotion unit 14, which is in turn composed of moving means 146, particularly wheels or other equivalent means such as tracks or the like or walking means or other means, propulsion means 145, directional control means 144, a control unit 141 comprising a directional control subunit 142 that control said directional control means 144 and a propulsion control subunit 143 that controls said propulsion means 145.

The control unit 141 receives the information required for actuating the propulsion means 145 and the directional control means 144 so that the self-propelled apparatus 1 can be caused to advance along one of the paths of the system from a receiver unit 15, which is connected to the two antennas 10 and 11. The receiver unit 15 communicates with the memory unit 33 contained in each identification device 3, 4 by the transceiver unit 31 of said identification devices.

According to the preferred embodiment, as shown in Figure 2, the position and orientation data collected by the receiver 15 are transmitted to a processing unit 13, which transforms such data into control signals useful for advance control and directional control. In a possible embodiment as shown in Figure 3, the processing unit 13 comprises, for instance, a memory unit 131, that can receive information from said receiver unit 15 about the relative position, with respect to other identification devices, or the absolute position with respect to an absolute coordinate system, of the identification device 3 that has been located, on the relative position, with respect to other identification devices, or the absolute position with respect to an absolute coordinate system of the identification device 4 that forms a pair with it and is part of the identification unit or "island" and of or about the relative position, with respect to other identification devices, or the absolute position with respect to an absolute coordinate system of the identification devices closest to it, and stores such information. A distance calculating unit 132 calculates the distance from the self-propelled apparatus 1 and said located identification device 3, 4. A calculating unit 133 determines the position and orientation of said apparatus 1. Said distance calculating unit 132 and position and orientation calculating unit 133 are connected to a decision unit 137 that processes the information received from said calculating units 132 and 133 and decides which direction to follow and the distance cover, and imparts relevant instructions to the control unit 141.

According to an optional improvement of the self-propelled apparatus, which is shown in the embodiment of Figure 3, said distance calculating unit 132 and position and orientation calculating unit 133 for calculating distance, position and orientation of the self-propelled apparatus, provide calculated data to a position and orientation memory 134 which is in turn connected, together with a position and orientation memory 131 containing data of the previous and next identification devices along the path to be followed, to a comparing unit 135 that compares such data. By this arrangement, the comparing unit receives position information, i.e. the relative distance and orientation of the identification device that is being currently located, from the one detected before and checks the consistency between said data and that calculated by the units 131 and 133 according to the path actually covered between the previous position and the current position of the identification devices and the direction that has been actually followed. Thus, the relative position and orientation values of two successive identification devices along a path are constantly checked as a self-propelled apparatus passes therethrough along the path of the self-propelled apparatus, with the measured data being possibly used to update the data stored in the memories of the identification devices. Here, the possibility should be considered that, if the deviation between the relative position or distance and relative orientation data of two successive identification devices along a path as stored in the identification devices and the data as measured when a self-propelled apparatus 1 passes therethrough, exceeds a given threshold, the measured data is ignored and discarded as unreliable, diagnostic means of the self-propelled apparatus being possibly actuated by this event to determine whether the sensors of the apparatus, that were used to determine the distance covered and/or to set the direction, operate correctly or are damaged.

If such deviation falls within an acceptable statistical fluctuation, then a correcting and updating unit will be actuated, which writes updated information into the located identification device, through said transmitter unit 16, said transmitter unit being in turn connected to the antennas 10 and 11.

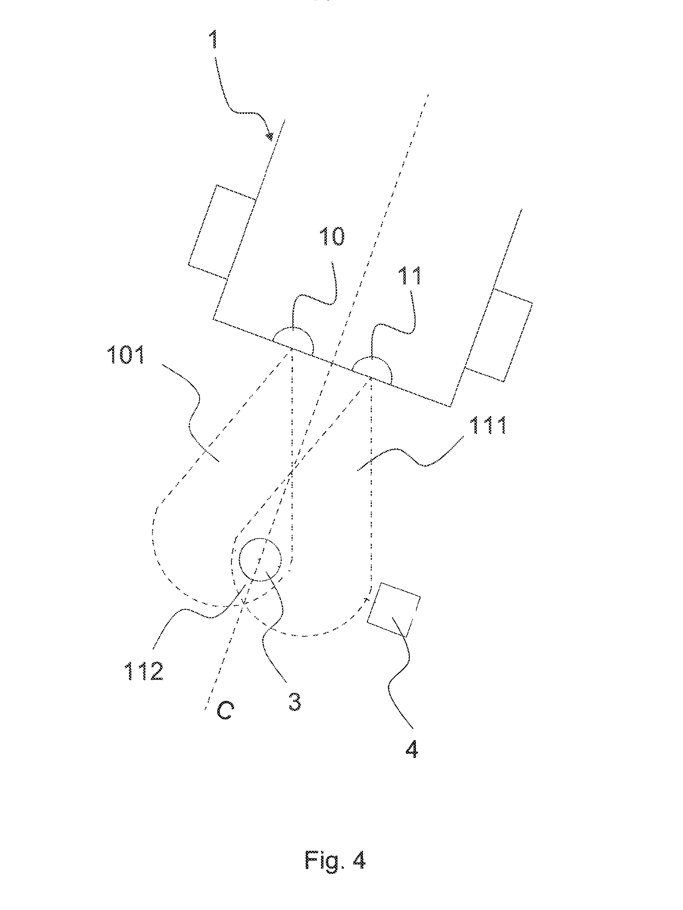

Figure 4 is a top plan view showing the operation of the system of the present invention in combination with two identification devices 3, 4 that form together an identification unit or "island", allowing determination of both the position of a self-propelled apparatus 1 and its orientation, i.e. its direction of advance.

Such self-propelled apparatus 1 has a pair of antennas 10 and 11 with main lobes 101 and 111 overlapped to form an overlap area of relatively small size, with reference to an axis thereof, which in a preferred embodiment, is parallel or coincident with the central longitudinal axis of the self-propelled apparatus. The overlap area 112 of the two main lobes 101 and 111 of the antennas 10 and 11 preferably has an elongate shape in the direction of an axis parallel or coincident with the central longitudinal axis of the self-propelled apparatus 1, and its extension in width, i.e. in a direction transverse to that of the longitudinal axis, may be changed by changing the orientation of the two antennas 10 and 11, to change the overlap area of the two main lobes 101 and 111 and the shape of said area.

The overlap area 101 and 111 forms a common receiving area 112 in which signals from the identification devices are received, which means that position and orientation indications are deemed to be reached by the self-propelled apparatus when the signals transmitted by an identification device 3, 4 are received by both antennas, i.e. the identification device or the transmitted signal falls in the overlap area 112 of the two main lobes 101 and 111 of the two antennas 10, 11. This affords high precision in locating an identification device by the self-propelled apparatus 1. Here, said identification device 3 is located by causing said self-propelled apparatus 1 to make movements until it reaches a position in which the signal transmitted by said identification device 3 is detected by both antennas 10 and 11, which means that said identification device is in said common receiving areas 112.

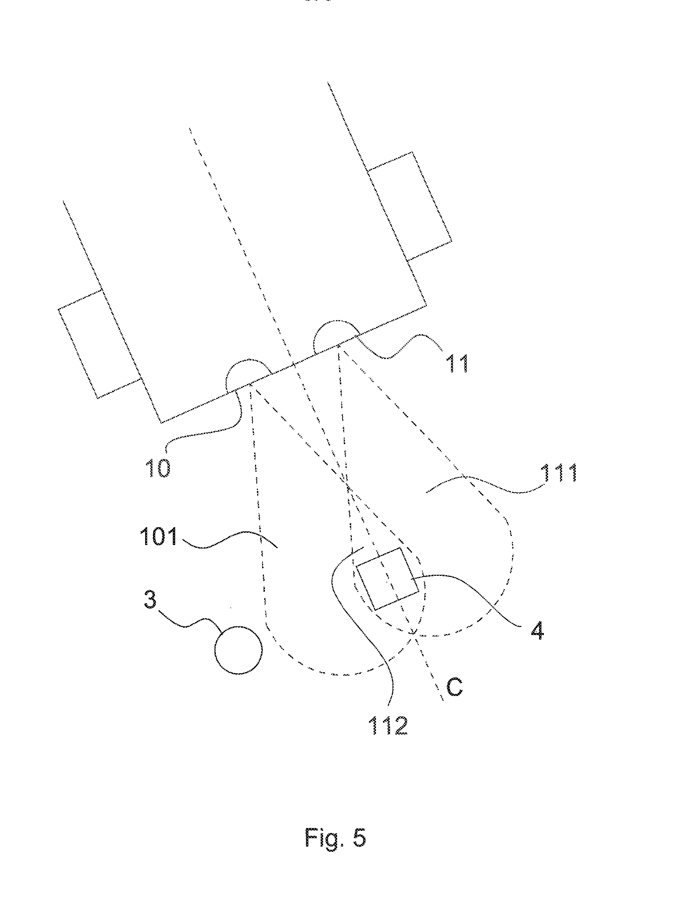

Figure 5 shows a detail of a top view of the self-propelled apparatus 1 and a pair of identification devices 3 and 4, in which said self-propelled apparatus 1 performs the step next to that of locating the identification device 3 as shown in Figure 4, and particularly locates the identification device 4 that forms a pair with the identification device 3, by said two antennas 10 and 11, the receiving lobes 101 and 111 of said two antennas 10 and 11 having a common receiving area 112, said identification device 4 being precisely located by the self-propelled apparatus 1 by causing said self-propelled apparatus 1 to make movements until it reaches the position in which the signal transmitted by said identification device 4 is detected by both antennas 10 and 11, with said identification device thus falling in said common receiving area 112, whereby the information retrieved from said identification devices 3 and 4 allows the self-propelled apparatus 1 to not only calculate its own position but also get information about its orientation, i.e. about the direction of its longitudinal axis relative to a predetermined uniquely defined axis, i.e. the axis that joins the two identification devices 3, 4 of the pair that constitutes a position and orientation identification unit. Such axis is shown by way of example by the broken line designated as C in Figures 4 and 5. It will be appreciated that the direction and orientation in space of the self-propelled apparatus 1 may be determined by a simple trigonometric calculation, with an angle A being for example determined between the position that is used by the self-propelled apparatus 1 to identify the position of the identification device 4 and the position used to identify the position of the identification device 4 of the same identification unit or when the self-propelled apparatus 1 has determined the coordinates of the two identification devices 3, 4.

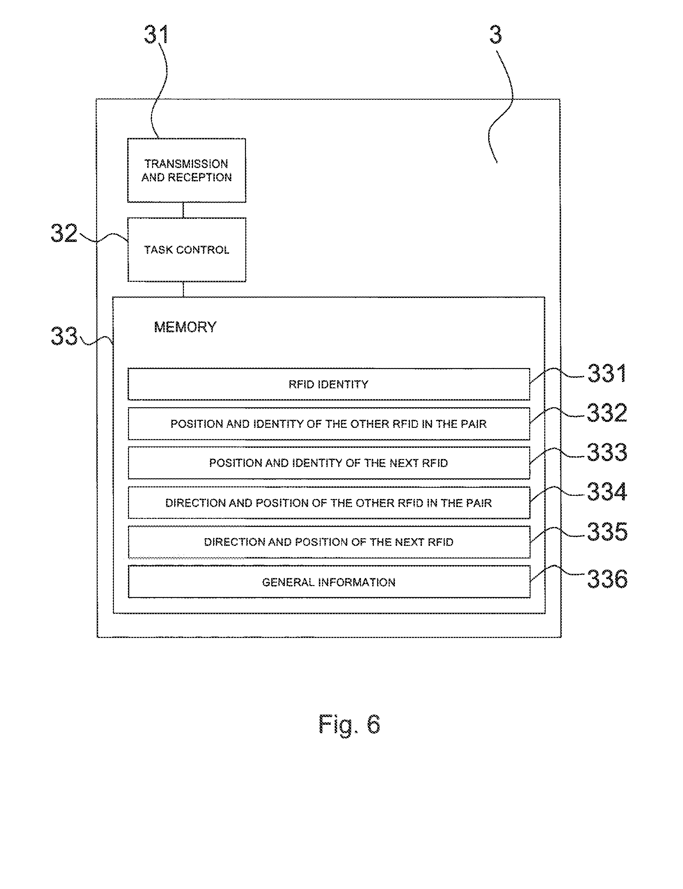

Figure 6 shows the structure of an identification device 3, 4. The structures of the two identification devices that together form a unit for identifying the position and/or orientation of a self-propelled apparatus 1 that can interact with said identification devices are substantially identical. Each unit is composed of the following functional blocks: A transceiver unit 31 that receives and transmits information, e.g. by modulation of radiofrequency electromagnetic waves. The transceiver unit 31 is connected to a task control unit 32 that is used both for receiving data from the unit 31 and storing it into a memory unit 33 and for retrieving data from the memory unit 33 and provide it to the transceiver unit 31 once a transmission request is received by said transceiver unit 31. Said memory unit 33 may be composed of several memory areas for storage of different types of information, and several subunits 331 to 336. For instance, a memory subunit or area 331 is designed to contain the identification data of the identification device 3. There may be provided a subunit 332 to contain data of the relative position, with respect to other identification devices, or the absolute position with respect to an absolute coordinate system, of the identification device that forms a pair with the identification device 3; a subunit 333 to contain data of the position/s of the identification devices closest to the identification device 3; a subunit 334 to contain data of the direction of the identification device 4 that forms a pair with the identification device 3; a subunit 335 to contain data of the direction of the identification device/s closest to the identification device 3; a subunit 336 to contain general data such as data about path conditions or the task to be accomplished.

In a preferred embodiment, the identification devices advantageously consist of individual RFID tags.

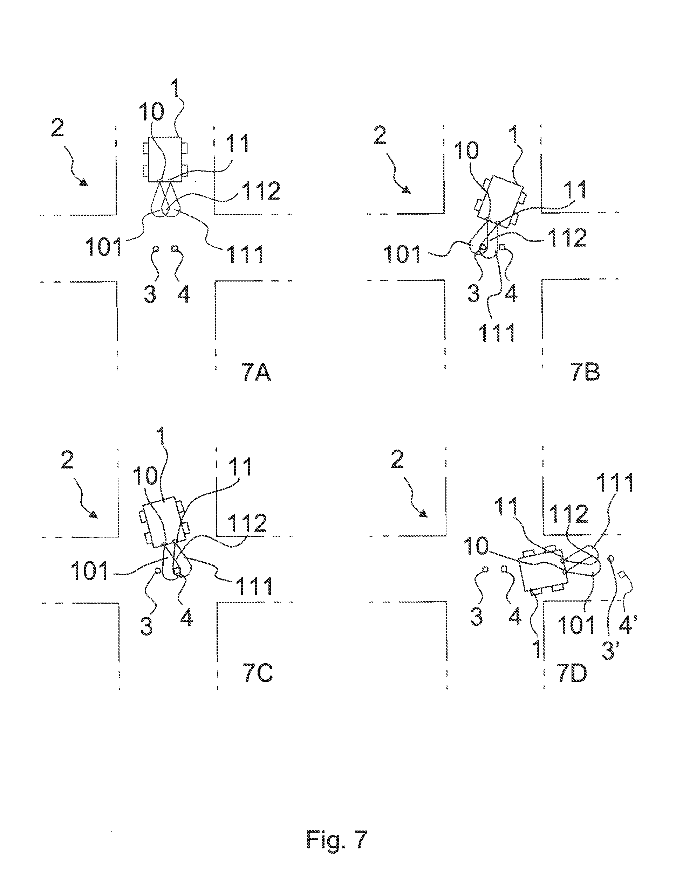

Figure 7 is a top view of four successive steps of system operation:
in Figure 7a, the self-propelled apparatus 1 moves towards the first pair of identification devices 3 and 4;
in Figure 7b, at least one of the two antennas 10 and 11 has detected one of said identification devices in its own receiving lobe 101 or 111, and received the information contained therein, said self-propelled apparatus 1 has made rotational and translational movements until the located identification device 3 has been detected by both antennas 10 and 11, and hence said located identification device 3 falls within the intersection area 112 of the lobes 101 and 111;
in Figure 7c, said self-propelled apparatus 1 has made rotational and translational movements to locate the identification device 4 that forms the pair with the identification device 3 and receive the information contained therein, until the located identification device 4 has been detected by both antennas 10 and 11 and hence said located identification device 4 falls within the intersection area 112 of the lobes 101 and 111;
in Figure 7d, said self-propelled apparatus 1 has calculated its own position and orientation based on the information received by the identification devices 3 and 4, has stored the relative position, with respect to other identification devices, or the absolute position with respect to an absolute coordinate system, of the closest identification devices 3' and 4' and moves towards them.

These steps are repeated every time that the self-propelled apparatus 1 reaches a position and orientation identification island, i.e. an identification unit composed of a pair of identification devices 3, 4.

When the self-propelled apparatus reaches the next identification unit, i.e. the one comprising the identification devices 3', 4', as described above with reference to Figures 2 and 3, it reads the relative position with respect to other identification devices, or the absolute position with respect to an absolute coordinate system, of the identification devices 3', 4' as stored in their memory 331, or calculates their positions relative to the identification devices 3 and 4 and compares these positions with the position data it stored, by reading it from the memory 333 of the previous identification devices 3 and 4 and with the positions calculated from the positions of the previous identification devices 3, 4 retrieved from the memory 331 thereof, and the positions calculated by the means 132 and 133 from the position of departure, i.e. the previous identification devices 3 and 4 and the distance covered and the direction followed to reach the next identification devices 3', 4'.

The calculated position data of the next identification devices 3', 4' may be accepted or discarded, if they are too different from those stored in the memories 331 of the identification devices 3', 4', or may be used to update the position data stored in the identification devices, thereby improving the precision of position indication.

Since each identification device has a memory area 333 that stores the relative position with respect to other identification devices, or the absolute position with respect to an absolute coordinate system, of one or more of the closest identification devices, it will be apparent that the relative position information of two successive identification devices 3, 4 and 3', 4' may be checked by updating the position of wither the next identification device 3', 4' or the previous one 3, 4. In this case, upon later passage of a self-propelled apparatus that moves in a direction opposite to that described above, the new data of relative position with respect to other identification devices, or absolute position with respect to an absolute coordinate system, of the identification devices 3, 4 that has been corrected in the identification devices 3', 4' is used for correcting information of relative position with respect to other identification devices, or absolute position with respect to an absolute coordinate system of the identification devices 3, 4 contained in the memory 331 thereof, by the update and correction procedure as described above.

The ability of self-propelled apparatus 1 to both read position data and update it and write information into the memories of the identification devices allows use of said self-propelled apparatus for laying a succession of identification devices along one or more paths to form position and orientation identification units along said path.

For this purpose, and with an improvement that can apply to at least some of the self-propelled apparatus of the system, these self-propelled apparatus may further include a section for laying identification devices, determining their positions and writing the position data of said identification and the ones close to them in the memories of these identification devices. An example of a self-propelled apparatus that also includes this section is shown in Figure 3, where the self-propelled apparatus 1 has a laying unit 12 that comprises means 121 for determining the position and orientation of the self-propelled apparatus 1, a control unit 122 that controls a picking and laying unit 123, which picks up identification devices from a magazine 124 adapted to contain said identification devices, and which unit 123 lays said identification devices at predetermined locations along a path. Furthermore, the laying unit 12 includes a writing unit 125, which allows transmission of information about the positions of identification devices, to be stored into the memories of the latter, through the transmitter unit 16.

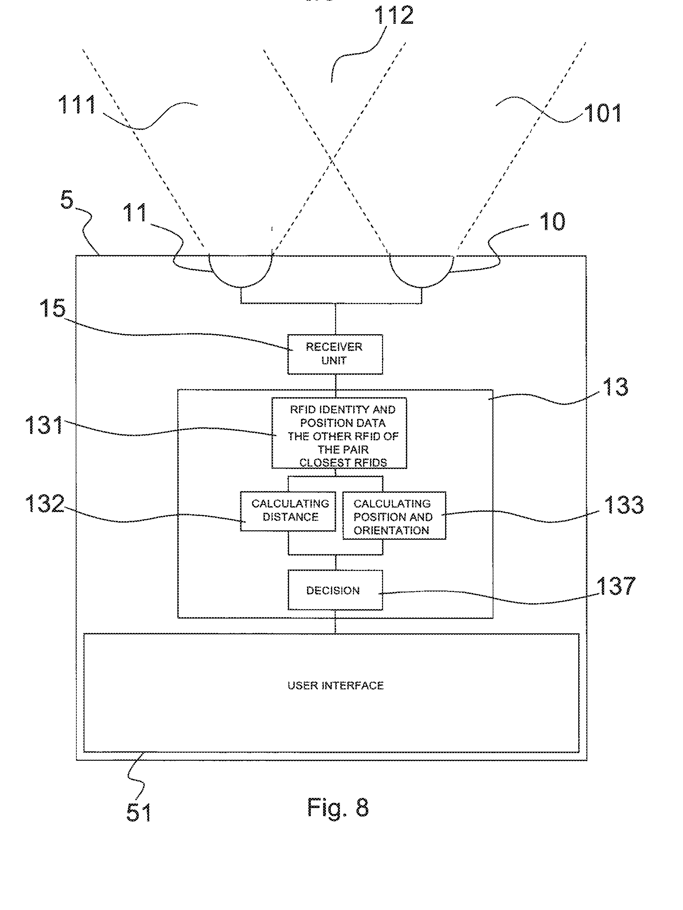

In a variant for, the invention is also suitable for application as a guidance or navigation system for human personnel. This configuration includes, for example, a navigator having one or more of the above features, with interface means that indicate the path to be followed by the user. Figure 8 shows an exemplary embodiment of a guidance device 5 of the present invention, which is designed to interact with the above described identification devices 3, 4 and to provide path indications to human personnel. Said guidance device is composed of a receiver unit 15 that receives information from two antennas 10 and 11 and transmits such information to a processing unit 13, said processing unit 13 being in turn composed of a few memory subunits. A memory unit 131 receives information from said receiver unit 15 about the position of the located identification device 3, the identification device 4 that forms a pair therewith and is part of the identification unit or "island" and the identification device/s closest to it, and stores such information. A distance calculating unit 132 calculates the distance between the guidance device 5 and said located identification device 3, 4. A calculating unit 133 determines the position and orientation of said guidance device 5. Said distance calculating unit 132 and position and orientation calculating unit 133 are connected to a decision unit 137 that processes the information received from said calculating units 132 and 133 and instructs the user about the direction to follow and the distance to cover through the user interface means 51. These user interface means may consist, for instance, of a display screen that displays path information with any displaying method, and may integrate such information with voice messages.

It shall be noted that all guidance-related features described with reference to the self-propelled apparatus also apply to the present case, whereby the inventive concepts shall be deemed to be also extended to this embodiment, in all combinations and subcombinations described in self-propelled apparatus embodiments.

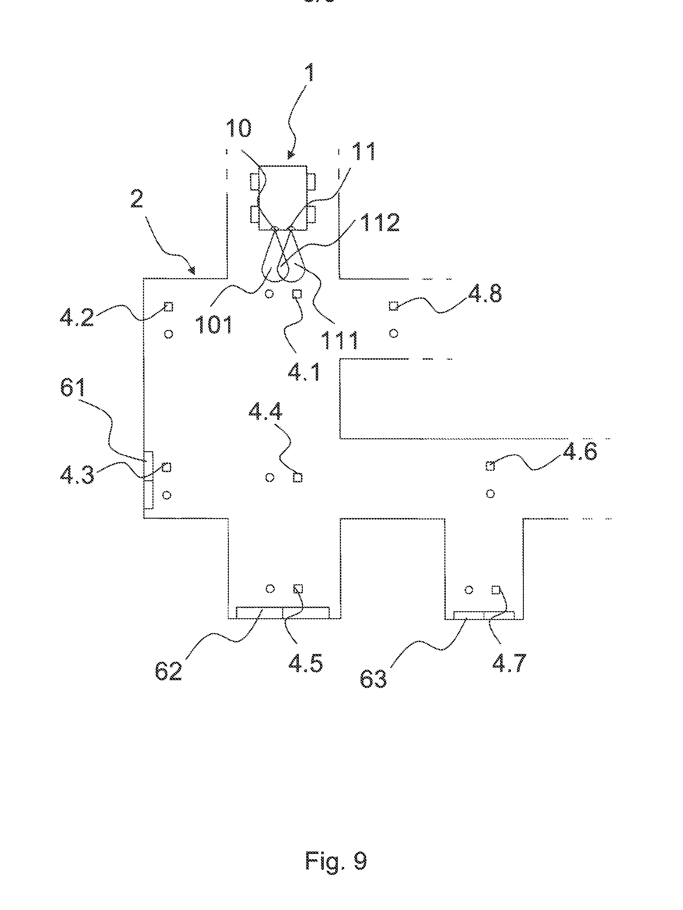

Figure 9 shows, by way of example and without limitation, two possible operating modes of the system regardless of the type of information contained in the identification devices concerning either its relative position with respect to other identification devices or its absolute position with respect to an absolute coordinate system.

A first operating mode involves no fixed destination, with the self-propelled apparatus 1 moving in a predetermined manner along the paths of the system, and only knowing the identification devices through which it has passed and moving towards the identification devices it has not reached yet.

In one example of this mode, the self-propelled apparatus 1 may have cleaning tasks, and is not required to run through paths it has already covered, and clean them again, but only has to move towards unexplored sections.

Particularly, the self-propelled apparatus 1 moves towards the identification device 4.1, and is allowed to select from the identification devices 4.8, 4.4, 4.2, whereby it randomly chooses, for example, to move on to the identification device 4.2, while leaving a trance of its passage by writing in the memory of the device 4.1. From the identification device 4.2 it cannot move back to the identification device 4.1, and hence it moves to the identification device 4.3 and then to 4.4, while repeating the same writing process in the memories of said identification devices, to prevent them from going through them again. As it reaches the identification device 4.4, it can still select between the identification devices 4.5 and 4.6, and discretionally chooses to move, for instance, towards the identification device 4.5. Now, the only possible choice is to move back to the identification device 4.4, although the latter has already been visited, and then move on, as the only possible choice, towards the identification device 4.6 and beyond.

In a further improvement, the marking of identification devices may be associated with the indication of the time at which such marking has occurred. Thus, the self-propelled apparatus 1 may receive information indicating whether it has visited each identification device and when it has visited it for the last time, so that it can move back to already visited locations, if a predetermined time has expired.

In a second operating mode, the self-propelled apparatus has to reach at least one predetermined destination or run through a path that leads it to successive stations to accomplish predetermined tasks.

In one example of this mode, a database is provided in the memory of the self-propelled apparatus 1, which database contains a list of the identification devices 4.1, 4.2, 4.3, 4.4, 4.5, 4.6, 4.7 to be reached, so that the self-propelled apparatus 1 selects from time to time from the various identification devices, and can reach three places of interest 61, 62, 63 that may be, for instance, ambulatories receiving different medicaments.

For the implementation of this process, the self-propelled apparatus may have a knowledge of either the simple sequence of the identification devices to be reached or the identification devices that are present and the relations therebetween, for autonomous processing of preferential paths.

The self-propelled apparatus 1 may receive a time sequence of the three places of interest to be reached, such as 62, 63, 62 and thus use the information in its database to process a path that leads it first to the place 62 through the identification devices 4.1, 4.4, 4.5, then towards the place 63, through the identification devices 4.4, 4.6, 4.7, and later towards the place 61 through the identification devices 4.6, 4.4, 4.3.

As an alternative, the places of interest are indicated in no predetermined order, and the self-propelled apparatus 1 processes the path to follow by itself, through distance optimization.

It is worth noting that the embodiments and the structures described and suggested herein should be intended without limitation, as the same features may be obtained with the help of different means, that may be selected from a wide range of different construction solutions, which selections fall within the basic knowledge and the normal designing skills of the average skilled person.

## Claims

1. A system for guiding one or more self-propelled apparatus
**characterized in that**
it is composed of one or more paths that may be covered by self-propelled traveling apparatus, said paths being composed of position identification devices, in which their positions along a path are stored, said identification devices being arranged along each path at predetermined locations thereof, and said identification devices being remotely queried for position data by one or more self-propelled apparatus
and each of said self-propelled apparatus includes propulsion and directional control means, means for reading and writing the information contained in said identification devices, electronic processing means for processing information and making choices, a processing program being executed by said electronic processing means for determining the path of the apparatus from the relative positions of said identification devices, a unit for controlling said propulsion and directional control means which implements said choices made by said electronic processing means,
at least one pair of said identification devices being provided for each predetermined location of the path, each comprising a transceiver unit, a task control unit, and a memory unit that contains information about the identity and position of the identification device that contains it, about its relative position with respect to other identification devices or its absolute position with respect to an absolute coordinate system of the identification device making a pair with the identification device that contains it and about the relative position with respect to other identification devices or the absolute position with respect to an absolute coordinate system of the identification devices in the vicinity of the identification device that contains it.

2. A system as claimed in claim 1, **characterized in that** said identification devices may be removably positioned within a space by one or more self-propelled positioning apparatus, each of said positioning apparatus include propulsion and directional control means, an internal magazine for containing said identification devices, means for securing said identification devices within the space, means for reading and writing the information contained in these identification devices, electronic processing means for processing information and making choices, a processing program being executed by said electronic processing means for determining the path of the apparatus from the relative positions of said identification devices, a unit for controlling said propulsion and directional control means which implements said choices made by said electronic processing means.

3. A system as claimed in one or more of the preceding claims, **characterized in that** said self-propelled positioning means have means for checking and updating the information contained in said identification devices, and said information is repeatedly updated by said checking and updating means through displacement from the last identification device being positioned to the second-last identification device being positioned and vice versa.

4. A system as claimed in one or more of the preceding claims, **characterized in that** it comprises one type of self-propelled apparatus having propulsion and directional control means, an internal magazine containing said identification devices, means for securing said identification devices within the space, means for reading and writing the information contained in said identification devices, electronic means for processing information and making choices, a control unit for controlling said propulsion means which implements said choices made by said electronic means, which apparatus act both as self-propelled positioning apparatus and as self-propelled traveling apparatus.

5. A system as claimed in one or more of the preceding claims, **characterized in that** said identification devices receive and transmit information by modulation of radio-frequency electromagnetic waves through said transceiver unit, and said self-propelled apparatus have at least one pair of antennas with overlapped receiving lobes that create an overlap area, the signal being only deemed to be valid if the identification device is contained in such lobe overlap area, and particularly said overlap area extends along the median axis of the self-propelled apparatus.

6. A system as claimed in one or more of the preceding claims, **characterized in that** said memory unit of each of said identification devices associated with one of the predetermined locations along the path contains information about the identity of the identification device that contains it, and information about the position of the identification device that contains it.

7. A system as claimed in one or more of the preceding claims, **characterized in that** said memory unit of each of said identification devices associated with one of the predetermined locations along the path contains information about the position of the identification device making a pair with the identification device that contains it, information about the position/s of the identification device/s closest to the identification device that contains it, information about the direction between the position of the identification device making a pair with the identification device that contains it and the position of such identification device, information about the direction between the position/s of the identification device/s closest to the identification device that contains it and the position of such identification device.

8. A system as claimed in one or more of the preceding claims, **characterized in that** said identification devices are RFID devices.

9. A system as claimed in one or more of the preceding claims, **characterized in that** said self-propelled apparatus have means for determining their own position relative to an absolute coordinate system and means for recognizing obstacles within the space in which they move.

10. A system as claimed in one or more of the preceding claims, **characterized in that** said self-propelled apparatus are replaced by guide devices which interact with the identification devices, process information about the path to be followed, and transmit such information to human personnel via interface means.

11. A method for guiding one or more self-propelled traveling apparatus
**characterized in that**
it includes the following steps:
a) a self-propelled traveling apparatus locates an identification device
b) identity and position information concerning said identification device and identity and position information concerning the identification device that makes a pair with said identification device is collected
c) the identification device that makes a pair with said identification device is located
d) relative orientation information for the two identification devices is collected and orientation information for the self-propelled traveling apparatus is updated
e) identity and position information concerning the closest identification devices is collected
f) a selection is made about which one of said closest identification devices has to be reached first
g) said selected identification device is located.

12. A method as claimed in one or more of the preceding claims, **characterized in that** it includes the following steps:
a) said identification devices are positioned pairwise within a space, using one or more self-propelled positioning apparatus;
b) once that each pair of said identification devices has been positioned, the self-propelled positioning apparatus that performed said positioning step write into the memory of each of such identification devices identity and position information concerning said identification device, identity and position information concerning the identification device that makes a pair with said identification device, identity and position information concerning the surrounding identification devices;
c) after positioning of each pair of said identification devices, said self-propelled positioning apparatus are moved back to the pair of identification devices that have been last positioned;
d) said self-propelled positioning apparatus checks the information contained in the memories of said pair of identification devices;
e) said self-propelled positioning apparatus is moved back to the pair of identification devices that has been last positioned and corrects, if needed, the information contained in the memories of said last positioned pair of identification devices.

13. A method as claimed in one or more of the preceding claims, **characterized in that** each pair of identification devices is composed of a main identification device and a secondary identification device, the positions of both identification devices defining a single line in space passing therethrough, the information in the memory of the main identification device being coded using such line as a geometric reference.

14. A method as claimed in one or more of the preceding claims, **characterized in that** multiple self-propelled positioning apparatus simultaneously position and check the identification devices.

15. A method as claimed in one or more of the preceding claims, **characterized in that** said one or more self-propelled positioning apparatus may check and correct, if needed, the information contained in the memories of identification devices positioned by other self-propelled positioning apparatus.

16. A method as claimed in one or more of the preceding claims, **characterized in that** said one or more self-propelled traveling apparatus have means for writing into the memory of said identification devices and check and correct, if needed, the information contained in said memory each time they pass through an identification device.

17. A method as claimed in one or more of the preceding claims, **characterized in that** one type of self-propelled apparatus is used for both tasks of self-propelled positioning apparatus and self-propelled traveling apparatus.

18. A method as claimed in one or more of the preceding claims, **characterized in that**, since the self-propelled apparatus have two signal receiving antennas and said antennas have a common receiving area, each of said one or more self-propelled apparatus accurately locates each of said identification devices by displacements of said self-propelled apparatus to the position in which the signal transmitted by said identification device is detected by both antennas, whereby said identification device falls within the common receiving area of said two antennas.
